# EUROPEAN PATENT SPECIFICATION

(11) **EP 3 749 895 B1**
(45) Date of publication and mention of the grant of the patent: **18.09.2024**
(21) Application number: 18904596.6
(22) Date of filing: 14.12.2018
(51) Int. Cl.: F23J 15/04, B01D 53/78, B01D 47/00, C10K 1/08

(54) **AN APPARATUS FOR CLEANING EXHAUST SMOKE**
VORRICHTUNG ZUR REINIGUNG VON ABGASRAUCH
APPAREIL DE NETTOYAGE DE FUMÉE D'ÉCHAPPEMENT

(30) Priority: 09.02.2018 MY PI2018700528
(43) Date of publication of application: 16.12.2020
(73) Proprietor: Nano Silver Manufacturing SDN BHD, 40150 Selangor Shah Alam (MY)
(72) Inventor: TEE, Chee Seng, 40150 Shah Alam, Selangor (MY)
(74) Representative: Serravalle, Marco
(86) International application number: PCT/MY2018/050091
(87) International publication number: WO 2019/156549

(56) References cited:
- WO-A1-94/21356
- CN-A- 101 920 157
- CN-U- 205 145 962
- DE-A1- 19 713 683
- DE-A1- 19 844 049
- DE-A1- 3 324 123
- KR-A- 20140 024 116
- KR-A- 20140 024 116
- US-A- 3 348 830
- US-A- 4 594 081
- US-A- 4 990 166
- US-A- 5 787 821
- US-A1- 2010 126 349
- US-A1- 2010 254 869
- US-B1- 6 439 756

## Description

### FIELD OF INVENTION

The present invention relates to a cleaning apparatus. More particularly, the invention relates to an apparatus to clean or reduce pollutants in the smoke emitted from combustion.

### BACKGROUND OF THE INVENTION

Air pollution causes seriously impact people's health and the environment. The fumes and exhausts coming from municipal incinerators, coal burning power stations and many chemical and metallurgical processing plants are major sources of the air pollution. This is because of incomplete combustion, fly ash and other solids, ammonia, cyanogen, hydrogen sulphide and the acid oxides of sulphur and nitrogen. These gases also cause significant problems with their distinctive odors and leads to major health hazards causing such problems as eye irritation and respiratory illness and seriously aggravating cardiovascular illness.

Further, the acid oxides on being hydrated by natural moisture, form an acid rain which is quite corrosive to many unprotected metals and marble stone structures. The solid particles in addition to causing major cleaning problems in many urban areas have been known to act as cloud seeds causing unexpected or excessive amounts of rain or snow to precipitate in regions downstream from the stack. As a result of all this, there has been a significant effort made to greatly reduce, if not eliminate, all solid and soluble gas contamination in these exhausts.

Therefore, the present invention provides a portable apparatus that can be easily transported and arranged to any kind of combustion sources to treat the smoke emitted from it so that level of pollutants in the smoke can be reduced to the greater extent and release clean air into atmosphere.

DE 198 44 049 A1 discloses an apparatus for scrubbing smoke according to the preamble of claim 1.

### SUMMARY OF INVENTION

The present invention provides an apparatus, for scrubbing smoke in accordance with claim 1.

Preferably, the smoke is pre-treated with a scrubbing liquid in a wet scrubber tank, arranged between the combustion engine and the first tank.

Preferably, the propeller system is configured to rotate at a pre-determined speed for mixing the smoke and water in the compartment.

Preferably, the compartment is partially filled with the liquid up to a pre-determined level.

Preferably, the first tank further includes a drainage outlet to drain out the liquid from it at pre-set time period.

Preferably, the first tank further includes an auto refill inlet to refill the liquid automatically at pre-set time period.

Preferably, the smoke is directed to flow through a patterned flow path arranged in the compartment prior to mixing the smoke with the liquid.

One skilled in the art/grounding systems will readily appreciate that the invention is well adapted to carry out the grounding installation and obtain the advantages mentioned, as well as those inherent therein. The embodiments described herein are not intended as limitations on the scope of the invention.

### BRIEF DESCRIPTION OF THE DRAWINGS

For the purpose of facilitating an understanding of the invention, there is illustrated in the accompanying drawing the preferred embodiments from an inspection of which when considered in connection with the following description, the invention, its construction and operation and many of its advantages would be readily understood and appreciated.
- Fig. 1: is schematic diagram illustrating the smoke scrubbing apparatus in accordance to present invention.
- Fig. 2: is schematic diagram illustrating the smoke scrubbing apparatus arranged with a combustion source in accordance to present invention.

### DETAILED DESCRIPTION OF THE INVENTION

The invention will now be described in greater detail, by way of example, with reference to the drawings.

The present invention provides an apparatus (100) for scrubbing a smoke which can be a white smoke or blue smoke or black smoke.

The white smoke results from water mixing with the exhaust gases or combustion cycle.

The blue smoke results from oil mixing with the exhaust gases or combustion cycle.

The black smoke results from an abundance of fuel in the combustion cycle.

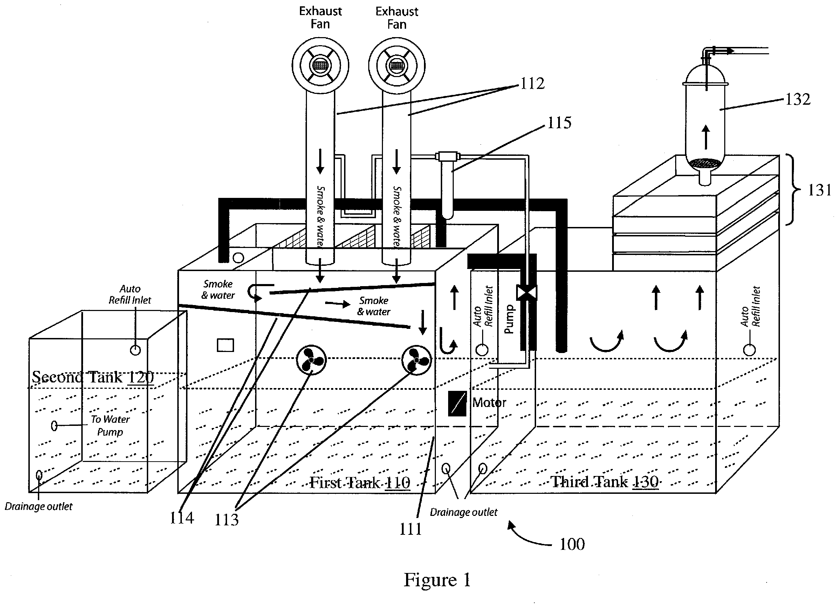

Referring to the figure 1, illustrates a portable apparatus (100) to scrub smoke from combustion sources comprises of a first tank (110), a second tank (120) and a third tank (130). The smoke emitted from the combustion source is drawn in to the first tank (110) for providing first scrubbing effect.

The first tank (110) comprises of a compartment (111), an inlet (112), a propeller system (113), a patterned passage path flow (114), and a filter (115). The compartment (111) can be filled with a liquid fully or up to a pre-determined level. The liquid can be a water or a scrubbing liquid. The inlet (112) can be an elongated tower arranged above the compartment (111) which includes an exhaust fan arranged on one end of the tower to draw in the smoke and a liquid sprayer arranged inside the tower to spray the liquid on the smoke entering into the compartment (111) through the inlet (112). The patterned passage flow path (114) formed using a pair of plates of sheets arranged in form of a serpentine is arranged in the compartment (111) above the liquid level. The smoke and the water is directed to flow through the serpentine passage flow path such that the scrubbing liquid can be precipitated from the smoke to run down the flow path and into the liquid. The smoke is also precipitated while mixing with the liquid. The propeller system (113) is arranged in the compartment (111) filled with the liquid includes at least one propeller and a motor to power the propeller. The propeller system (113), rotates at a pre-determined speed in the liquid to ensure the smoke entering the compartment (111) is brought in to contact with the liquid to provide first scrubbing effect such that the pollutants, dirt in the smoke are scrubbed from it. This first scrubbing effect makes the smoke lighter and cleaner air. The liquid from the compartment (111) is directed to the inlet (112) via a pipe connecting the compartment (111) and elongated inlet (112) for reuse the liquid. The first tank (110) further includes a pump, arranged to pump the liquid from the compartment (111) to the inlet (112) via the filter (115) which is arranged to filter and cleanse the liquid from dirt in order reuse and spray clean liquid in the inlet (112). The filter (115) is arranged can be an alkaline filter system or any other filter system used. The compartment (111) further includes a drainage outlet and a refill inlet. The liquid in the first tank (110) becomes dirty over a period of time and the liquid can be changed automatically with clean liquid preferably at pre-set time interval. Where the dirty liquid can be drained out from the first tank (110) through the drainage outlet and fresh liquid is refilled in the first tank (110) through the auto refill inlet. The compartment (111) is divided into two sub compartments, first sub compartment and second sub compartment. In first sub compartment includes the passage flow path arranged in it. In second sub compartment includes a plurality of filters arranged where the smoke circulating in the first sub compartment is directed to flow through these filter layers and back to first sub compartment.

The second tank (120) is an auto refill tank comprises a liquid pump for the liquid supply and the drainage outlet to drain out the liquid from it. The second tank (120) supplies the liquid to the first tank (110) and the third tank (130) automatically and preferably at a pre-determined time interval such that the pre-determined liquid level is maintained in the first tank (110) and in the third tank (130).

The third tank (130) includes a refill inlet, a drainage outlet, a carbon filter layer (131) and a filter bag (132). The carbon filter layer (131) and the filter bag (132) are arranged on the top of the third tank (130). The treated smoke in the first tank (110) is directed through a branch pipe to flow into the third tank (130). In the third tank (130) is filled with the liquid fully or up to a pre-determined level. The first tank (110) and the third tank (130) are connected by the branch pipe whose one end is arranged in the first tank (110) to receive the treated smoke and the other end is arranged above the liquid level in the third tank (130). Where the treated smoke from the first tank (110) is directed to the third tank (130) via the branch pipe for further treatment for providing second scrubbing effect in the third tank (130). The treated smoke is retained in the third tank (130), due to pressure the heavier dust particles and/or the water droplets in the treated smoke settles down into the third tank (130). The liquid in the third tank (130) becomes dirty over a period of time and the liquid can be changed automatically with clean liquid preferably at pre-set time interval. Where the dirty liquid can be drained out from the third tank (130) through the drainage outlet and fresh liquid is refilled in the third tank (130) through the refill inlet. Further, the smoke is directed through the layers of the carbon filter (131) where the smoke is deodorized. Preferably three layers of the carbon is arranged in the carbon filter (131). Furthermore, the smoke is treated through the filter bag (132) and the clean air is released out from the outlet. The smoke is completely neutralized or scrubbed in the third tank (130) and the clean air is released out from the third tank (130).

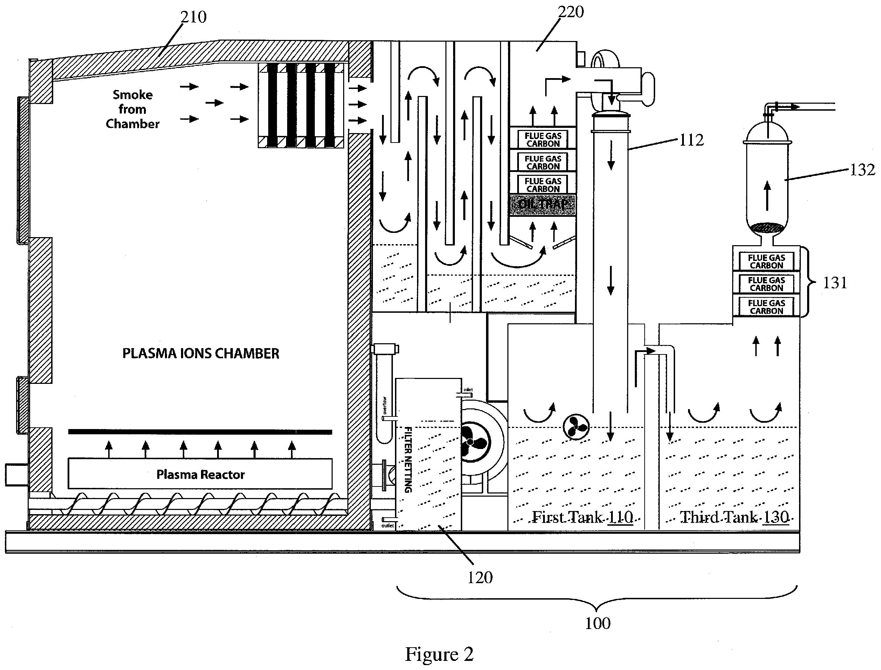

Referring to the figure 2, the smoke scrubbing apparatus (100) is portable and can be connected to any kind of the combustion source to form a unitary unit. The whole unit includes the combustion source (210), wet scrubber tank (220) and the smoke scrubbing apparatus (100). The combustion source can be any kind of source example plasma ions chamber. The industrial waste can be dumped into combustion chamber and is burnt at high temperature. The smoke from the combustion source can be pre-treated with a scrubbing solution in the wet scrubber tank (220) which can be arranged in between the combustion source and the first tank (110) as shown in the figure 2. The treated smoke is sent to the smoke scrubbing apparatus (100) for scrubbing the pollutants in the smoke.

The present invention provides an apparatus for scrubbing smoke as contained in the appended claims and as further disclosed in the foregoing description. Although this invention has been described in its preferred form with a degree of particularity, it is understood that the present disclosure of the preferred form has been made only by way of example and that numerous changes in the details of construction and the combination and arrangements of parts may be resorted to without departing from the scope of the invention as defined by the claims.

## Claims

1. An apparatus (100), for scrubbing smoke comprising:
a first tank (110), having:
a compartment (111), filled with a liquid; and,
an inlet (112), configured to draw in the smoke into the compartment (111) from a combustion source,
wherein the first tank (110) includes a propeller system (113), arranged within the compartment (111) for providing first scrubbing effect by mixing the smoke with the liquid,
wherein scrubbed liquid from the compartment (111) is directed to the inlet (112) to spray the liquid on the smoke entering through the inlet (112),
**characterized in that**
the first tank (110) further includes at least one filter arranged in between the compartment (111) and the inlet (112) to filter out the pollutants from the scrubbed liquid circulating between the compartment (111) and the inlet (112),
and **in that** the filter is an alkaline filter system.

2. An apparatus (100) according to claim 1, further comprising a wet scrubber tank, arranged between the combustion source and the first tank (110), wherein the smoke is pre-treated with a scrubbing liquid in the wet scrubber tank.

3. An apparatus (100) according to claim 1, wherein the propeller system (113) is configured to rotate at a pre-determined speed for mixing the smoke and water in the compartment (111).

4. An apparatus (100) according to claim 1, wherein the compartment (111) is partially filled with the liquid up to a pre-determined level.

5. An apparatus (100), according to claim 1, wherein the first tank (110) further includes a drainage outlet to drain out the liquid from it at pre-set time period.

6. An apparatus (100), according to claim 1, wherein the first tank (110) further includes an auto refill inlet to refill the liquid automatically at pre-set time period.

7. An apparatus (100), according to claim 1, wherein the smoke is directed to flow through a patterned flow path arranged in the compartment (111) prior to mixing the smoke with the liquid.

## Patentansprüche

1. Vorrichtung (100) zum Reinigen von Rauch, umfassend:
einen ersten Tank (110), der aufweist:
eine Kammer (111), die mit einer Flüssigkeit gefüllt ist; und
eine Einlassöffnung (112), die so konfiguriert ist, dass sie den Rauch von einer Verbrennungsquelle in die Kammer (111) zieht,
wobei der erste Tank (110) ein Propellersystem (113) beinhaltet, das innerhalb der Kammer (111) angeordnet ist, um eine erste Reinigungswirkung durch Mischen des Rauchs mit der Flüssigkeit bereitzustellen,
wobei gereinigte Flüssigkeit aus der Kammer (111) zum Einlass (112) geleitet wird, um die Flüssigkeit auf den durch den Einlass (112) eintretenden Rauch zu sprühen,
**dadurch gekennzeichnet, dass** der erste Tank (110) ferner mindestens einen Filter beinhaltet, der zwischen der Kammer (111) und dem Einlass (112) angeordnet ist, um die Schadstoffe aus der gereinigten Flüssigkeit herauszufiltern, die zwischen der Kammer (111) und dem Einlass (112) zirkulieren, und dass der Filter ein alkalisches Filtersystem ist.

2. Vorrichtung (100) nach Anspruch 1, ferner umfassend einen Nasswäschertank, der zwischen der Verbrennungsquelle und dem ersten Tank (110) angeordnet ist,
wobei der Rauch mit einer Waschflüssigkeit in dem Nasswäschertank vorbehandelt wird.

3. Vorrichtung (100) nach Anspruch 1, wobei das Propellersystem (113) konfiguriert ist, um sich mit einer vorbestimmten Geschwindigkeit zu drehen, um den Rauch und das Wasser in der Kammer (111) zu mischen.

4. Vorrichtung (100) nach Anspruch 1, wobei die Kammer (111) teilweise mit der Flüssigkeit bis zu einem vorbestimmten Pegel gefüllt ist.

5. Vorrichtung (100) nach Anspruch 1, wobei der erste Tank (110) ferner einen Abflussauslass beinhaltet, um die Flüssigkeit aus ihm zu einem voreingestellten Zeitraum abzulassen.

6. Vorrichtung (100) nach Anspruch 1, wobei der erste Tank (110) ferner einen automatischen Nachfülleinlass beinhaltet, um die Flüssigkeit automatisch zu einem voreingestellten Zeitraum nachzufüllen.

7. Vorrichtung (100) nach Anspruch 1, wobei der Rauch gerichtet ist, um durch einen gemusterten Strömungsweg zu strömen, der in der Kammer (111) angeordnet ist, bevor der Rauch mit der Flüssigkeit gemischt wird.

## Revendications

1. Appareil (100), pour nettoyer la fumée, comprenant :
un premier réservoir (110), ayant :
un compartiment (111), rempli d'un liquide ; et,
une entrée (112), configurée pour aspirer la fumée dans le
compartiment (111) à partir d'une source de combustion, dans lequel le premier réservoir (110) comprend un système d'hélice (113), disposé à l'intérieur du compartiment (111) pour fournir un premier effet nettoyant en mélangeant la fumée avec le liquide,
dans lequel le liquide nettoyé du compartiment (111) est dirigé vers l'entrée (112) pour pulvériser le liquide sur la fumée entrant par l'entrée (112),
**caractérisé en ce que** le premier réservoir (110) comprend en outre au moins un filtre disposé entre le compartiment (111) et l'entrée (112) pour filtrer les polluants du liquide nettoyé circulant entre le compartiment (111) et l'entrée (112), et **en ce que** le filtre est un système de filtre alcalin.

2. Appareil (100) selon la revendication 1, comprenant en outre un réservoir épurateur par voie humide, disposé entre la source de combustion et le premier réservoir (110),
dans lequel la fumée est prétraitée avec un liquide nettoyant dans le réservoir épurateur par voie humide.

3. Appareil (100) selon la revendication 1, dans lequel le système d'hélice (113) est configuré pour tourner à une vitesse prédéterminée pour mélanger la fumée et l'eau dans le compartiment (111).

4. Appareil (100) selon la revendication 1, dans lequel le compartiment (111) est partiellement rempli du liquide jusqu'à un niveau prédéterminé.

5. Appareil (100) selon la revendication 1, dans lequel le premier réservoir (110) comprend en outre une sortie de drainage pour drainer le liquide de celui-ci à une période de temps prédéfinie.

6. Appareil (100) selon la revendication 1, dans lequel le premier réservoir (110) comprend en outre une entrée de remplissage automatique pour remplir automatiquement le liquide à une période de temps prédéfinie.

7. Appareil (100), selon la revendication 1, dans lequel la fumée est dirigée pour s'écouler à travers un trajet d'écoulement à motifs disposé dans le compartiment (111) avant de mélanger la fumée avec le liquide.
